# EUROPÄISCHE PATENTSCHRIFT

(11) **EP 0 543 280 B1**
(45) Veröffentlichungstag und Bekanntmachung des Hinweises auf die Patenterteilung: **12.06.1996**
(21) Anmeldenummer: 92119336.3
(22) Anmeldetag: 12.11.1992
(51) Int. Cl.: H02K 9/197, H02K 5/128, H02K 3/487

(54) **Elektromotor**
Electric motor
Moteur électrique

(30) Priorität: 21.11.1991 DE 4138268
(43) Veröffentlichungstag der Anmeldung: 26.05.1993
(73) Patentinhaber: KSB Aktiengesellschaft, D-67227 Frankenthal (DE)
(72) Erfinder: Kochanowski, Wolfgang, W-6531 Windesheim (DE); Zarth, Peter, W-6719 Altleiningen (DE)

(56) Entgegenhaltungen:
- EP-A- 0 225 132
- WO-A-91/05398
- DE-A- 3 015 435
- FR-A- 2 241 902
- GB-A- 172 015
- US-A- 2 310 422
- US-A- 2 725 012
- US-A- 2 990 487
- US-A- 3 031 593
- PATENT ABSTRACTS OF JAPAN vol. 9, no. 230 (E-343)(1953) 17. September 1985 & JP-A-60 084 941 (HITACHI) 14. Mai 1985

## Beschreibung

Die Erfindung betrifft einen Elektromotor mit flüssigkeitsgefülltem Startor raum.

Ein derartiger Motor ist aus der DE-C-374 573 bekannt. Im Ruhezustand ist der Motor ständig mit Öl gefüllt, welches nach der Inbetriebnahme durch eine in die Pumpenwelle integrierte Fördereinrichtung aus dem Rotorraum abgesaugt und in den Statorraum gefördert wird. Während des Betriebes zirkuliert das Öl vom Statorraum durch die Pumpenwelle und zurück in den Statorraum. Infolge des während des Betriebes ölfrei bleibenden Rotorraumes wird eine Flüssigkeitsreibung innerhalb desselben vermieden. Gleichzeitig wird aufgrund der durchströmten Pumpenwelle dem Rotor Wärme entzogen und der Stator sowie Statorraum gekühlt.

Nachteilig bei dieser Lösung ist die in den Gleitlagern stattfindende Mischreibung beim Anlaufen der Maschine. Für einen Antrieb mit variabler Drehzahl, z.B. ein Frequenzumformer, ist diese Art der Lagerschmierung nicht geeignet, da die hydrodynamische Lagerwirkung nur bei hoher Drehzahl sicher wirkt. Bei niedriger Drehzahl würde das gezeigte Gleitlager zerstört werden. Weiterhin nachteilig ist die Ölfüllung des Rotorraumes, insbesondere im Spalt zwischen Rotor und Stator, weil dadurch beim Anlauf der Maschine ein hohen Beschleunigungsmoment notwendig ist. Die hohen Reibungskräfte der Ölfüllung können z.B. bei der Stern-Dreieck-Schaltung dazu führen, daß der Motor nicht über das Kippmoment hinaus hochläuft.

Die DE-C-337 561 zeigt einen Spaltrohrmotor, bei dem der Rotor und der Stator jeweils eine separate Flüssigkeitskühlung aufweisen, um eine Flüssigkeitsreibung im Luftspalt zu verhindern. Entsprechend dem damaligen Stand der Isolationstechnik fand mit hoher Wahrscheinlichkeit nur eine übliche Ölkühlung Verwendung. Zur intensiven Wärmeabfuhr aus dem Statorraum wurden Nutrohre verwendet, die den Statorraum durchdringen, wobei innerhalb derselben die Wicklungen angeordnet waren. Das Kühlmedium konnte somit direkt durch die Wicklung hindurchgeleitet werden, um die Wärme vom Entstehungsort abzuführen. Die Nutrohre selbst sind in den Endscheiben abgedichtet, die das Statorblechpaket zusammenhalten. Die Verwendung von ölgefüllten Motoren wird aber aus ökologischen Gründen immer häufiger unterbunden. Desweiteren ist die vorbekannte Bauart wegen der großen Abstände zwischen Rotor und Stator, bezogen auf die Drehachse, bedingt durch die, die Kühlräume begrenzenden Spaltrohre, im Hinblick auf die elektrischen Werte äußerst nachteilig. Außerdem ist die Einspeisung des kühlenden Öles in die Rotorwelle sowie dessen Abtransport mit erheblichen Dichtungsproblemen behaftet.

Wiederum eine andere Lösung zeigt der flüssigkeitsgekühlte Stator der US-A-2 497 650. Im Wicklungsraum sind zwischen Wicklung und Spaltrohr U-förmige Abschnitte angeordnet, durch die ein Kühlmedium hindurchgeleitet werden kann. Auch hier handelt es sich um eine ölgekühlte Maschine, die nach heutigen Bestimmungen aufgrund des umweltschädlichen Kühlmittels kaum noch Verwendung finden kann. Ebenso wie bei den anderen Lösungen besteht hier die Gefahr, daß durch den Druck im stationären, ölgekühlten Statorraum das Spaltrohr ausbeult und mit dem Rotor in Berührung kommt. Die Folge davon wäre eine Zerstörung der Maschine. Dies ließe sich nur durch ein sehr starkes Spaltrohr mit großer Wandstärke verhindern, wodurch jedoch die elektrischen Werte so verschlechtert werden, daß der Motor nicht mehr konkurrenzfähig ist.

Die WO 92/22121, ein Stand der Technik gemäß Art. 54 (3) EPÜ, zeigt eine ölgekühlte elektrische Maschine. Zur Verringerung der Reibungsverluste ist der Rotor in Wälzlagern gelagert. Mittels dieser Maßnahme sollen die Reibungsverluste im Rotorraum minimiert werden, welcher evakuiert und hermitisch abgedichtet ist. Aus Korrosionsschutzgründen kann der Rotorraum auch mit einem inerten Gas gefüllt sein.

Durch die DE-C-896 086 ist noch ein gasgekühlter Generator bekannt, bei dem Rotor- und Statorraum gasdicht ausgebildet sind. Der Rotorraum wird evakuiert, um die Reibungsverluste innerhalb desselben zu minimieren. Den Statorraum durchströmt ein nicht brennbares, unter Überdruck gehaltenes Gas zur Verbesserung der Kühlwirkung. Hierbei finden für den Statorraum zwei Kühlsysteme Verwendung, die zwei gegenläufige Kühlströme innerhalb des Statorraumes produzieren. Aber auch diese Lösung erfordert wiederum die Verwendung eines den Luftspalt vergrößernden Spaltrohres. Entweder muß Letzteres sehr dickwandig ausgebildet sein, um dem Überdruck zu widerstehen oder das Spaltrohr beult aus und kann so vom Rotor gestreift werden.

Der Erfindung liegt die Aufgabe zugrunde, einen universell einsetzbaren Elektromotor, vorzugsweise als Hochspannungsmotor ausgebildet, zu entwickeln, der für die unterschiedlichsten Einsatzfälle verwendbar ist. Die Lösung dieser Aufgabe erfolgt gemäß den Merkmalen des Anspruchs 1. Vorteilhafte Ausgestaltungen des Erfindungsgegenstandes sind in den abhängigen Ansprüchen beschrieben. Die wesentlichen Vorteile, die mit dieser Lösung erreichbar sind, stellen sich wie folgt dar:

Durch die Ausbildung des Rotorraumes als ein ständig trockener Raum besteht die Möglichkeit, den Rotor in handelsüblichen Wälzlagern zu lagern. Dies reduziert den Wartungsaufwand und ermöglicht bei leichter Montage eine günstige Fertigung. Weiterhin kann der Motor z.B. mittels Frequenzumwandlung mit verschiedenen Drehzahlen betrieben werden. Aufgrund der Wälzlagerung ist dies, im Gegensatz zu Gleitlagern, problemlos möglich. Die Maßnahme, den Statorraum ständig unter Vordruck zu halten, vermeidet die Bildung von Luftblasen innerhalb des Statorraumes und der darin eingebrachten Wicklungen. Der Vordruck kann hierbei durch bekannte Maßnahmen erreicht werden. Sollte ungünstigstenfalls ein Funkenüberschlag zwischen zwei Wicklungsdrähten stattfinden, so würde der dabei entstehende Lichtbogen infolge des unter Vordruck stehenden Kühlwassers und der fehlenden Luft sofort ausgelöscht werden, ein wesentlicher Beitrag zur Erhöhung der inneren Betriebssicherheit also. Weiterhin bewirkt der Vordruck, daß bei evtl. Undichtigkeiten innerhalb des Kühlsystems Kühlwasser austreten und kein Medium aus der Maschinenumgebung, z. B. Luft, eindringen kann. Der Einsatz als explosionsgeschützter Motor ist in einfacherer Weise erreichbar, da bereits alle vom Kühlwasser beaufschlagten Flächen druckfest ausgebildet sind. Die Verwendung eines unter Vordruck stehenden Kühlwassersystems erleichtert darüber hinaus die Motorüberwachung, denn Störungen des Motors äußern sich gegenüber dem Normalzustand in geänderten Druck- oder Temperaturverhältnissen. Dadurch wird eine direkte Einflußnahme auf den Motor ermöglicht, z. B. in Form von rechtzeitigem Abschalten, bevor größere Schäden entstehen; Vorwarnungen durch Alarmsignale bei weitergehendem Betrieb, Beeinflußung der Kühlleistung des Kühlsystems o.ä. vorbeugende Maßnahmen. Durch örtliche Überhitzung entstehender Druckanstieg wäre ebenso schnellstens registrierbar. Der Verzicht auf ein Spaltrohr zwischen Stator- und Rotorteil erlaubt die Herstellung optimaler elektrischer Verhältnisse zwischen diesen beiden Teilen. Die querwasserdichte Ausbildung des Stators verhindert, daß unter Druck stehendes Kühlwasser zwischen den einzelnen Statorblechen des Statorpaketes hindurch in den Rotorraum eindringen kann. Zu diesem Zweck sind die einzelnen Statorbleche durch Schweißen, Kleben, Löten oder andere bekannte Maßnahmen an ihren Berührungsstellen gegeneinander abgedichtet. Die die Nuträume gegenüber dem Rotorraum abdichtenden Nutkeile verhindern einen Austritt des die Wicklungen durchströmenden Kühlwassers. Die querwasserdichte Ausbildung des Stators kann auch erreicht werden, indem in die Nuträume sogenannte Nutrohre hineingesteckt werden. Die Nutrohre können höchste Drücke aufnehmen, da sie sich im Ständerblechpaket direkt abstützen. Eventuelle Berührungen mit dem Rotor, wie bei Spaltrohren, sind somit ausgeschlossen. Das Kühlwassersystem weist im gesamten Bereich des Motors keine bewegliche Dichtung auf, so daß dessen Leckage ausgeschlossen wird.

Die Ausgestaltungen der Ansprüche 7 und 8 erlauben die Verwendung einer kurzen und biegesteifen Motorwelle, da die Wälzlager unmittelbar hinter dem Rotorblechpaket angeordnet sein können und die Lagerkräfte auf kürzestem Wege in dem von den Wicklungsköpfen überdeckten Bereich des stationären Gehäuses eingeleitet werden. Auch übt der gekühlte Statorraum einen positiven Einfluß auf die Lagertemperatur aus. Da der Statorraum gegenüber dem Rotorraum als Wärmesenke wirkt, ist ein guter Wärmeabtransport vom Rotor möglich.

In den Ansprüchen 9 bis 11 sind weitere, das Kühlsystem betreffende Ausgestaltungen beschrieben. Für Anwendungsfälle, bei denen aufgrund der Betriebsverhältnisse mit Verschmutzungen der Motorgehäuse-Außenseite zu rechnen ist, ist ein externer Wärmetauscher für das Motorkühlwasser anbringbar, denn auf dem Gehäuse ablagernde Verkrustungen o. ä. würden die Wärmeabstrahlung reduzieren. Je nach Einsatzbereich und Motorleistung kann das Kühlwasser durch Thermosyphonwirkung innerhalb des Statorgehäuses zirkulieren. Es ist aber auch möglich, eine externe Umwälzpumpe zur Kühlwasserförderung einzusetzen, wobei durchaus eine übliche Heizungsumwälzpumpe verwendbar ist. Das Druckhaltesystem bietet den Vorteil, daß bei kleinen Leckagen der Motor so lange weiterbetrieben werden kann, bis die Schadensbehebung mit vertretbarer Betriebsstörung behoben werden kann. Außerdem verhindert der Vordruck bei Leckagen das Eindringen von Luft in den Statorraum. Im Hinblick auf einen evtl. Wicklungsschluß verhindert dies die Ausbreitung eines Lichtbogens.

Zur sicheren Beherrschung des Vordruckes bei gleichzeitiger Lebensdauererhöhung können gemäß der Ansprüche 12 und 13 die Nutrohre im Bereich der Nutspalte verstärkt ausgebildet sein. Auch wird ein erhöhter elektrischer Widerstand zwischen den das Statorblechpaket zusammenhaltenden Endringen und den darin dichtend gelagerten Nutkeilen oder Nutrohren erreicht durch entsprechende konstruktive Maßnahmen, wie z. B. Oxidation der Metalloberfläche, Gummidichtung u. ä. Dadurch ergibt sich der Vorteil, daß die einzelnen Nutrohre oder Nutkeile durch die Endringe nicht elektrisch kurzgeschlossen werden und somit nur geringste Stromwärmeverluste entstehen.

Ein Ausführungsbeispiel der Erfindung ist in den Zeichnungen dargestellt und wird im folgenden näher beschrieben. Es zeigt die
- Fig. 1: einen Elektromotor im Schnitt, die
- Fig. 2: in größerer Darstellung einen Nutraum mit eingelegtem Nutrohr und die
- Fig. 3: in größerer Darstellung einen den Nutraum abdichtenden Nutkeil.

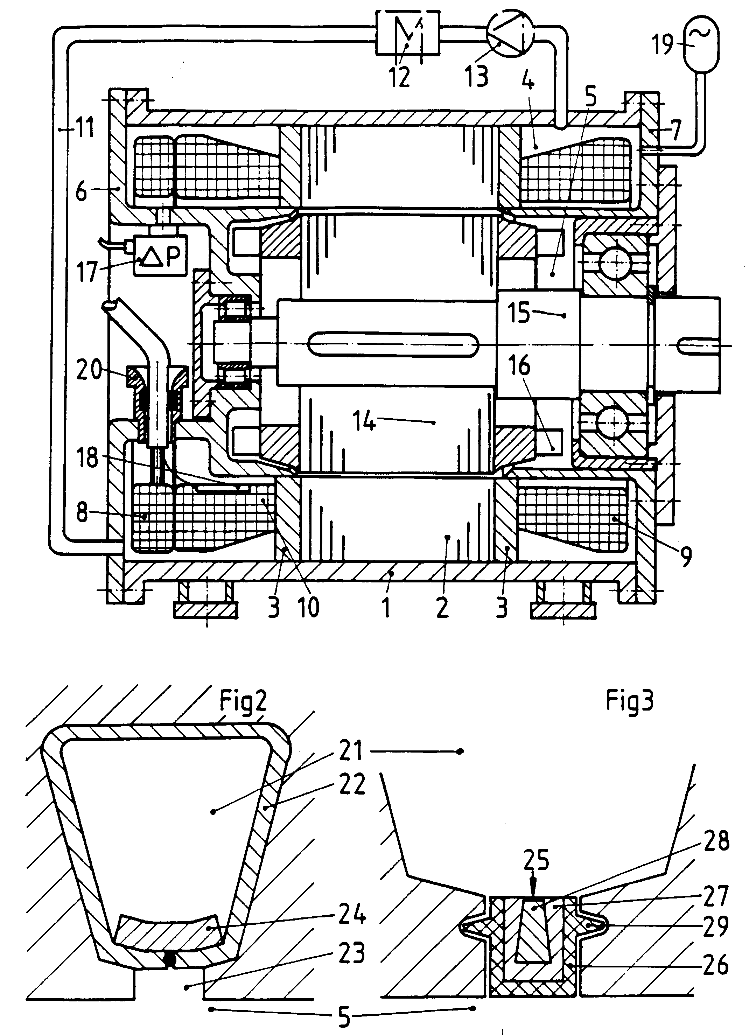

Der in der Fig. 1 gezeigte Elektromotor besteht aus einem Gehäuse (1), in dem ein Statorblechpaket (2) mit beidseitig begrenzenden Endringen (3) angeordnet ist. Die Unterteilung in Statorraum (4) und Rotorraum (5) bewirken Wälzlagerträger (6, 7), welche dichtend an den Endringen (3) und am Gehäuse (1) anliegen. Die Wälzlagerträger (6, 7) überdecken den Bereich der Wickelköpfe (8, 9) der Wicklung (10). Die Wandstärke der Wälzlagerträger (6, 7) und des Gehäuses (1) ist so gewählt, daß ein innerhalb des Statorraumes (4) bestehender Systemdruck beherrscht wird.

Aus dem wassergefüllten Statorraum (4) führt eine am Gehäuse (1) befestigte Leitung (11) heraus und mündet vorzugsweise im stirnseitigen Bereich des Wälzlagerträgers (6) wieder in den Statorraum (4). Zur Verbesserung der Kühlwirkung bzw. zur Steigerung der Kühlwasserzirkulation können Wärmetauscher (12) oder eine Umwälzpumpe (13) zusätzlich in die Leitung (11) eingebaut werden. Als Umwälzpumpe (13) kann ohne weiteres eine handelsübliche Heizungsumwälzpumpe verwendet werden.

Die im Bereich der Wickelköpfe (8, 9) befindlichen Wälzlagerträger (6, 7) nehmen die Kräfte der den Rotor (14) tragenden Welle (15) auf kürzestem Wege auf. Durch die so nah wie möglich am Rotor angeordneten Wälzlager kann eine sehr kurze und steife Welle Verwendung finden. Zudem ist das Volumen des Rotorraumes (5) minimiert, was wiederum Vorteile für eine Motorvariante in explosionsgeschützter Ausführung bietet. Am Rotor (14) seitlich angebrachte Lüfterflügel (16) dienen zur Umwälzung des im Rotorraum befindlichen Luftvolumens. Die Abwärme der Lager kann zum einen auf kürzestem Wege zur Wandung des gekühlten Statorraumes geleitet werden, zum anderen bildet der kühlere Statorraum eine Wärmesenke in Bezug auf den Rotorraum, so daß die dort produzierte Wärme ebenfalls abgeführt wird. An dem Wälzlagerträger (6) ist hier noch ein Druckwächter (17) befestigt, mit dessen Hilfe Druckschwankungen innerhalb des unter Druck stehenden Kühlsystems erfaßt und für Kontroll- und/oder Regelzwecke ausgewertet werden können. Dem gleichen Zweck dient hier mindestens ein am Wicklungskopf (8) angebrachter Temperaturfühler (18). Zweckmäßigerweise sind diese Elemente an geeigneter Stelle angebracht, um aussagekräftige und verwertbare Meßwerte zu erhalten. Je nach Größe der Maschine können ein oder mehrere dieser Druck- und/oder Temperaturüberwachungselemente eingesetzt werden.

Der Statorraum (4) sowie die die Wicklungen aufnehmenden Räume im Statorblechpaket (2) sind gegenüber dem Rotorraum (5) kühlwasserdicht ausgebildet. Im Ausführungsbeispiel übernehmen dies die Wälzlagerträger (6, 7) sowie die nachfolgend geschilderten Maßnahmen der Fig. 2 und 3. Um bei einer evtl. Undichtigkeit des Wasserkühlsystems für eine gewisse Zeit den Betrieb aufrechtzuerhalten, ist das Gehäuse (1) mit einem - hier verkleinert und symbolhaft dargestellten - Druckhaltesystem (19) versehen. Dieses speist Flüssigkeit nach und verhindert das evtl. Eindringen von Luft in den Motor. Wie die Ausbildung des Wälzlagerträgers (6) zeigt, ermöglicht die Anordnung des Wälzlagers im Bereich des Wickelkopfes (8), daß auch die Kabeleinführung (20) in den vom Wickelkopf (8) überdeckten Bereich angeordnet werden kann. Somit ist diese vor Beschädigungen geschützt und platzsparend angeordnet.

Die Fig. 2 zeigt in vergrößerter Darstellung einen Querschnitt durch einen Nutraum (21) des Statorblechpaketes. Jeder Nutraum (21) ist mit einem Nutrohr (22) flüssigkeitsdicht ausgekleidet. Somit bleibt das hindurchströmende, direkt kühlende Wasser und die -hier nicht dargestellten- Wicklungsdrähte vom luftgefüllten Rotorraum (5) getrennt. In Abhängigkeit von dem im Statorraum (4) herrschenden Systemdruck, der gleich dem Druck des Kühlsystems ist, können die Nutrohre (22) im Bereich der Nutspalte (23) zusätzlich mit Verstärkungsblechen (24) ausgestattet sein. Bei geringen Systemdrücken sind die Nutrohre (22) jeweils durch eine einzige Schweißnaht verschlossen.

In der Fig. 3 ist ein Nutraumausschnitt (21) gezeigt, der durch einen dichtenden Nutkeil (25) flüssigkeitsdicht verschlossen ist. In dem Nutspalt (23) liegt der elastische Dichtteil (26) nach erfolgter Montage dichtend an. Dazu wird in das Trägerteil (27) ein gegenüber dem Dichtteil weniger elastischer Spanndorn (28) hineingetrieben, wodurch eine Spreizung des Trägerteils (27) und die Anpressung des Dichtteils (26) stattfindet. Zusätzlich kann das Dichtteil (25) mit in Nutrichtung verlaufenden zusätzlichen Lamellen (29) ausgestattet sein. Diese liegen in entsprechend gestalteten Nuten des Statorblechpaketes (2) und verstärken die Dichtwirkung. Für die in Fig. 3 gezeigte konstruktive Lösung muß das Statorblechpaket selbst querwasserdicht ausgebildet sein. Die einzelnen Statorbleche liegen dichtend aneinander, so daß entlang der Spalte zwischen den einzelnen Blechen kein Kühlwasser vom Statorraum (4) in den Rotorraum (5) gelangen kann.

## Patentansprüche

1. Elektromotor mit flüssigkeitsgefülltem Statorraum (4) , einer Umwälzeinrichtung (13) für die Flüssigkeit und einem während des Betriebes trocken ausgebildeten Rotorraum (5) wobei alle flüssigkeitsbeaufschlagten Flächen des Statorraums druckfest gegenüber einem Systemdruck ausgebildet sind,
der Rotorraum (5) ständig trocken ausgebildet, ein darin befindlicher Rotor (14) während des Betriebes luftgekühlt ist
und der Rotor (14) in Wälzlagern gelagert ist, wobei
der Statorraum (4) ständig mit unter einem Vordruck stehenden Kühlwasser gefüllt ist und
das Kühlwasser im Bereich des Statorblechpaketes (2) die Wicklungsräume (21) sowie die Wicklungen (10) direkt durchströmt.

2. Elektromotor nach Anspruch 1, dadurch gekennzeichnet, daß die Wicklungen (10) im Statorblechpaket (2) in an sich bekannten, in Endringen (3) dichtend anliegenden Nutrohren (22) angeordnet sind.

3. Elektromotor nach Anspruch 1, dadurch gekennzeichnet, daß die die Wicklungen aufnehmenden Nuträume (21) durch in den Statorzähnen und in beiderseits des Statorblechpaketes (2) angeordneten, magnetisch nicht leitenden Endringen (3) eingesetzte Nutkeile (25) gegenüber dem Rotorraum (5) druckdicht verschlossen sind und daß das Statorblechpaket (2) querwasserdicht ausgebildet ist.

4. Elektromotor nach Anspruch 3, dadurch gekennzeichnet, daß die Nutkeile (25) als aus Dichtteil (26), Trägerteil (27) und Spanndorn (28) bestehende Verbundkonstruktion ausgebildet sind.

5. Elektromotor nach den Ansprüchen 3 und 4, dadurch gekennzeichnet, daß das Dichtteil (26) mit in entsprechenden Statornutschlitzen eingreifenden, sich in Längsrichtung erstreckenden Dichtlamellen (29) versehen ist.

6. Elektromotor nach den Ansprüchen 1 bis 5, dadurch gekennzeichnet, daß der Kühlwasserkreislauf des Statorraumes (4) mit einer Druck- und/oder Temperaturüberwachungseinrichtung (17, 18) versehen ist.

7. Elektromotor nach den Ansprüchen 1 bis 6, dadurch gekennzeichnet, daß die den Rotor (14) tragenden Wälzlager innerhalb des von den Wickelköpfen (8, 9) überdeckten Rotorbereiches abgestützt sind.

8. Elektromotor nach Anspruch 7, dadurch gekennzeichnet, daß die Wälzlagerträger (6, 7) des Rotors (14) die druckfeste Wandung für den Statorraum (4) im Bereich der Wickelköpfe (8, 9) bilden.

9. Elektromotor nach den Ansprüchen 1 bis 8, dadurch gekennzeichnet, daß das Kühlsystem mit einem externen Wärmetauscher (12) versehen ist.

10. Elektromotor nach den Ansprüchen 1 bis 9, dadurch gekennzeichnet, daß eine extern angeordnete Umwälzpumpe (13) das Kühlmedium im Statorraum (4) umwälzt.

11. Elektromotor nach den Ansprüchen 1 bis 10, dadurch gekennzeichnet, daß das Kühlsystem mit einem Druckhaltesystem (19) versehen ist.

12. Elektromotor nach den Ansprüchen 1 und 2, dadurch gekennzeichnet, daß die Wicklungen (10) im Stator (2) umhüllende Nutrohre (22) im Bereich der Nutspalte (23) verstärkt ausgebildet sind.

13. Elektromotor nach den Ansprüchen 1 bis 5 und 12, dadurch gekennzeichnet, daß ein erhöhter elektrischer Widerstand zwischen den Endringen (3) und den Nutrohren (22) oder den Nutkeilen (25) besteht.

## Claims

1. Electric motor having a liquid-filled stator space (4), a circulating device (13) for the liquid, and a rotor space (15) designed to be dry during operation, all a surfaces of the stator space to which liquid is applied being designed in a pressure-proof fashion with respect to a system pressure, the rotor space (5) being designed to be constantly dry, a rotor (14) located therein being air-cooled during operation and the rotor (14) being mounted in rolling-contact bearings, the stator space (4) being constantly filled with pre-pressurized cooling water, and the cooling water flowing directly through the overhang spaces (21) and the windings (10) in the region of the stator core stack (2).

2. Electric motor according to Claim 1, characterized in that the windings (10) in the stator core stack (2) are arranged in slot tubes (22) which are known per se and bear sealingly in end rings (3).

3. Electric motor according to Claim 1, characterized in that the slot spaces (21) accommodating the windings are sealed pressure-tight with respect to the rotor space (5) by means of slot wedges (25) which are inserted in the stator teeth and in magnetically nonconductive end rings (3) arranged on both sides of the stator core stack (2), and in that the stator core stack (2) is constructed in a laterally watertight fashion.

4. Electric motor according to Claim 3, characterized in that the slot wedges (25) are designed as an assembly comprising the sealing part (26), carrier part (27) and mandrel (28).

5. Electric motor according to Claims 3 and 4, characterized in that the sealing part (26) is provided with sealing fins (29) which engage in corresponding stator slot openings and extend in the longitudinal direction.

6. Electric motor according to Claims 1 to 5, characterized in that the cooling-water circuit of the stator space (4) is provided with a pressure-monitoring and/or temperature-monitoring device (17, 18).

7. Electric motor according to Claims 1 to 6, characterized in that the rolling-contact bearings carrying the rotor (14) are supported inside the rotor region covered by the winding overhangs (8, 9).

8. Electric motor according to Claim 7, characterized in that the rolling-contact bearing carriers (6, 7) of the rotor (14) form the pressure-proof wall for the stator space (4) in the region of the winding overhangs (8, 9).

9. Electric motor according to Claims 1 to 8, characterized in that the cooling system is provided with an external heat exchanger (12).

10. Electric motor according to Claims 1 to 9, characterized in that an externally arranged circulating pump (13) circulates the cooling medium in the stator space (4).

11. Electric motor according to Claims 1 to 10, characterized in that the cooling system is provided with a pressure-maintaining system (19).

12. Electric motor according to Claims 1 and 2, characterized in that slot tubes (22) enclosing the windings (10) in the stator (2) are designed to be reinforced in the region of the slot gaps (23).

13. Electric motor according to Claims 1 to 5 and 12, characterized in that there is an increased electrical resistance between the end rings (3) and the slot tubes (22) or the slot wedges (25).

## Revendications

1. Moteur électrique avec une chambre de stator (4) remplie de liquide, un dispositif de circulation (13) pour le liquide et une chambre de rotor (5) à sec pendant le fonctionnement, dans lequel toutes les faces de la chambre de stator exposées au liquide sont résistantes à la pression par rapport à une pression du système, la chambre de rotor (5) est à sec en permanence, un rotor (11) qui s'y trouve est refroidi à l'air pendant le fonctionnement, et le rotor (14) est supporté dans des roulements, dans lequel la chambre de stator (4) est remplie en permanence d'eau de refroidissement qui se trouve sous une pression d'admission et l'eau de refroidissement circule directement à travers les chambres d'enroulement (21) ainsi qu'à travers les enroulements (10) dans la région du paquet de tôles (2) du stator.

2. Moteur électrique suivant la revendication 1, caractérisé en ce que les enroulements (10) sont disposés dans le paquet de tôles (2) du stator dans des tubes d'encoche (22) connus en soi appliqués de façon étanche dans des anneaux d'extrémité (3).

3. Moteur électrique suivant la revendication 1, caractérisé en ce que les chambres d'encoche (21) recevant les enroulements sont isolées de façon étanche à la pression par rapport à la chambre de rotor (5) par des cales d'encoche (25) introduites dans les dents du stator et dans des anneaux d'extrémité (3) magnétiquement non conducteurs disposés de part et d'autre du paquet de tôles (2) du stator et en ce que le paquet de tôles (2) du stator est transversalement étanche à l'eau.

4. Moteur électrique suivant la revendication 3, caractérisé en ce que les cales d'encoche (25) forment une structure composite se composant d'une partie d'étanchéité (26), d'une partie de support (27) et d'un mandrin de serrage (28).

5. Moteur électrique suivant les revendications 3 et 4, caractérisé en ce que la partie d'étanchéité (26) est pourvue de lamelles d'étanchéité (29) s'étendant en direction longitudinale, engagées dans des fentes correspondantes dans les encoches du stator.

6. Moteur électrique suivant les revendications 1 à 5, caractérisé en ce que le circuit de l'eau de refroidissement de la chambre de stator (4) est pourvu d'un dispositif (17, 18) de surveillance de la pression et/ou de la température.

7. Moteur électrique suivant les revendications 1 à 6, caractérisé en ce que les roulements portant le rotor (14) sont supportés à l'intérieur de la région du rotor recouverte par les têtes de bobines (8, 9).

8. Moteur électrique suivant la revendication 7, caractérisé en ce que les supports (6, 7) des roulements du rotor (14) forment la paroi résistant à la pression pour la chambre de stator (4) dans la région des têtes de bobines (8, 9).

9. Moteur électrique suivant les revendications 1 à 8, caractérisé en ce que le système de refroidissement est pourvu d'un échangeur de chaleur externe (12).

10. Moteur électrique suivant les revendications 1 à 9, caractérisé en ce qu'une pompe de circulation (13) disposée à l'extérieur fait circuler l'agent de refroidissement dans la chambre de stator (4).

11. Moteur électrique suivant les revendications 1 à 10, caractérisé en ce que le système de refroidissement est pourvu d'un système de maintien de la pression (19).

12. Moteur électrique suivant les revendications 1 et 2, caractérisé en ce que les tubes d'encoche (22) entourant les enroulements (10) dans le stator (2) sont renforcés dans la région de la fente (23) de l'encoche.

13. Moteur électrique suivant les revendications 1 à 5 et 12, caractérisé en ce qu'il existe une résistance électrique accrue entre les anneaux d'extrémité (3) et les tubes d'encoche (22) ou les cales d'encoche (25).
